# EUROPEAN PATENT SPECIFICATION

(11) **EP 4 290 090 B1**
(45) Date of publication and mention of the grant of the patent: **11.11.2026**
(21) Application number: 23178796.1
(22) Date of filing: 12.06.2023
(51) Int. Cl.: F16C 27/02, F16C 17/02, F16C 27/04, F16C 19/06, F16C 19/26, F16C 19/36, F16C 35/067, F16C 35/063, F16C 35/077, F16C 7/02, B62K 25/28

(54) **INTEGRATED BEARING HARDWARE FOR SHOCK ASSEMBLY**
INTEGRIERTE LAGERHARDWARE FÜR STOSSANORDNUNG
MATÉRIEL DE PALIER INTÉGRÉ POUR ENSEMBLE DE CHOC

(30) Priority: 10.06.2022 US 202263351123 P; 09.06.2023 US 202318208214
(43) Date of publication of application: 13.12.2023
(73) Proprietor: Fox Factory, Inc., Duluth, GA 30097 (US)
(72) Inventor: Shaffer, Samuel, Duluth, 30097 (US)
(74) Representative: Greaves Brewster LLP

(56) References cited:
- WO-A1-2004/089734
- DE-A1- 102019 112 152
- JP-A- 2020 003 066

## Description

### CROSS-REFERENCE TO RELATED APPLICATIONS

This application claims priority from U.S. Provisional Patent Application No. 63/351,123 filed on June 10, 2022 and from U.S. Patent Application No. 18/208,214 filed on June 9, 2023.

### FIELD OF THE INVENTION

Embodiments of the invention generally relate to shock assemblies. Some embodiments relate to a method of installing integrated bearing hardware in a shock assembly. Some embodiments relate to an adapter comprising the integrated bearing hardware. Some embodiments relate to a shock assembly comprising the integrated bearing hardware or the adapter. Some embodiments relate to a vehicle comprising the shock assembly.

### BACKGROUND

Shock assemblies (e.g., dampers, shock absorbers, etc.) are used in numerous different vehicles and configurations to absorb some or all of a movement that is received at an unsprung portion of a vehicle before it is transmitted to a suspended portion of the vehicle, see for example JP 2020 003066 A.

For example, when a wheel hits a pothole, the encounter will cause an impact force on the wheel. However, by utilizing suspension components including one or more shock assemblies, the impact force can be significantly reduced or even absorbed completely before it is transmitted to a person on a seat of the vehicle.

### SUMMARY OF THE INVENTION

According to some embodiments there is provided a method for installing integrated bearing hardware in a shock assembly according to appended claim 1.

In some embodiments the method may comprise coupling a first bearing cover to said mounting feature exterior of said first bearing. The first bearing cover may prevent said first bearing from moving from an installed position within said mounting feature during an installation of said shock assembly with a component. The method may comprise coupling a second bearing cover to said mounting feature exterior of said second bearing. The second bearing cover may prevent said second bearing from moving from said installed position within said mounting feature during said installation of said shock assembly with said component.

According to the invention the method comprises installing said second bearing at said second side of said mounting feature wherein said second bearing bottoms out on said axle and not said mounting feature.

According to the invention the method comprises installing said first bearing into a first bearing bore of said mounting feature. A relief is located behind said first bearing bore such that only an outer race of said first bearing contacts a body of said mounting feature. In some embodiments the method may comprise installing said second bearing into a second bearing bore of said mounting feature. A second relief may be located behind said second bearing bore such that only an outer race of said second bearing contacts said body of said mounting feature.

In some embodiments said mounting feature may be selected from a group consisting of: an eyelet and a body hardware bore.

In some embodiments the method may comprise coupling said axle with a clearance fit to said mounting feature. The method may comprise coupling said axle with a slip fit to an inner diameter (ID) of said first bearing and said second bearing. The method may comprise coupling said axle with a tight clearance fit to a shock bolt that passes through said axle.

In some embodiments the method may comprise coupling said first bearing cover to said mounting feature exterior of said first bearing with an interference fit. The first bearing cover may have a clearance fit with respect to a shock bolt. The method may comprise coupling said second bearing cover to said mounting feature exterior of said second bearing with an interference fit, wherein said first bearing cover has said clearance fit with respect to said shock bolt.

In some embodiments said first bearing and said second bearing are full-complement fully sealed bearings.

In some embodiments said first bearing and said second bearing are selected from a group of bearings consisting of: a single row ball, a double row ball, an angular contact ball, thrust ball, self-aligning ball, deep groove ball, filling notch ball, cylindrical roller, gear roller, spherical roller, needle roller, taper roller, self-aligning roller, fluid, and magnetic.

In some embodiments the first bearing and the second bearing are installed directly (e.g. by pressing) into a shock damper body of the shock assembly.

According to the invention there is provided integrated bearing hardware for a shock assembly. The integrated bearing hardware comprises a first bearing installed at a first side of a mounting feature of said shock assembly. There is a second bearing installed at a second side of said mounting feature.

According to the invention there is an axle installed within said mounting feature, said axle abutting said first bearing and said second bearing.

According to the invention said second bearing bottoms out on said axle and not said mounting feature.

In some embodiments there may be a clearance fit between said axle and said mounting feature. In some embodiments there may be a slip fit between said axle and an inner diameter (ID) of said first bearing and said second bearing. In some embodiments there may be a tight clearance fit between said axle and a shock bolt that passes through said axle.

In some embodiments the integrated bearing hardware may comprise a first bearing cover coupled with said mounting feature exterior of said first bearing. The first bearing cover may prevent said first bearing from moving from an installed position within said mounting feature during an installation of said shock assembly with a component. There may be a second bearing cover coupled with said mounting feature exterior of said second bearing. The second bearing cover may prevent said second bearing from moving from said installed position within said mounting feature during said installation of said shock assembly with said component.

In some embodiments said first bearing cover and said second bearing cover may comprise an interference fit with respect to said first bearing and said second bearing respectively, and a clearance fit with respect to a shock bolt.

In some embodiments there may be said first bearing may be installed in a first bearing bore of said mounting feature. A relief may be located behind said first bearing bore such that only an outer race of said first bearing contacts a body of said mounting feature.

In some embodiments the second bearing may be installed in a second bearing bore of said mounting feature. A relief may be located behind said second bearing bore such that only an outer race of said second bearing contacts said body of said mounting feature.

In some embodiments said mounting feature may be selected from a group consisting of: an eyelet and a body hardware bore.

In some embodiments said first bearing and said second bearing may be full-complement fully sealed bearings.

In some embodiments said first bearing and said second bearing may be housed in a sleeve.

In some embodiments the first bearing and the second bearing are installed directly within a shock damper body of the shock assembly.

According to the invention there is provided a shock assembly comprising integrated bearing hardware as set out above.

According to the invention there is provided a shock assembly with integrated bearing hardware. The shock assembly may comprise a damper chamber comprising a working fluid, a piston coupled with a shaft, said piston dividing said damper chamber into a compression side and a rebound side, a mounting feature for coupling said shock assembly with a component. The mounting feature comprises a first bearing bore with a relief located there behind at a first side of a mounting feature. There is a first bearing coupled with said first bearing bore such that only an outer race of said first bearing contacts a body of said mounting feature. There is an axle within said mounting feature. The axle abuts said first bearing. The mounting feature comprises a second bearing bore at a second side of said mounting feature. There is a second bearing coupled with said second bearing bore to retain said axle. The second bearing bottoms out on said axle and not on said body of said mounting feature.

In some embodiments the shock assembly may further comprise a first bearing cover coupled with said mounting feature exterior of said first bearing. The first bearing cover may prevent said first bearing from moving from an installed position within said mounting feature during an installation of said shock assembly with a component. There may be a second bearing cover coupled with said mounting feature exterior of said second bearing. The second bearing cover may prevent said second bearing from moving from said installed position within said mounting feature during said installation of said shock assembly with said component.

In some embodiments the first bearing and the second bearing are installed directly within a shock damper body of the shock assembly.

In some embodiments, the mounting feature of the shock assembly may be adapted for mounting the shock assembly between a sprung and/or unsprung part of a vehicle, the integrated bearing hardware permitting rotation between the mounting feature of the shock assembly and the sprung and/or unsprung part of the vehicle during compression and rebound of the shock assembly.

In some embodiments the shock assembly may be adapted for enclosure within a part (e.g. a restricted space) of the vehicle, such as inside a frame of the vehicle. In some embodiments the shock assembly may have a narrow mounting interface width (e.g. 17 mm and 20 mm).

According to some embodiments there is provided an adapter with integrated bearing hardware. The adapter may comprise a sleeve. The adapter may comprise a mounting feature coupled with said sleeve. The mounting feature may comprise a first bearing bore with a relief located there behind at a first side of a mounting feature. The mounting feature may comprise a first bearing coupled with said first bearing bore such that only an outer race of said first bearing contacts a body of said mounting feature. The mounting feature may comprise an axle within said mounting feature, said axle abutting said first bearing. The mounting feature may comprise a second bearing bore at a second side of said mounting feature. The mounting feature may comprise a second bearing coupled with said second bearing bore to retain said axle, wherein said second bearing bottoms out on said axle and not on said body of said mounting feature. The mounting feature may comprise a first bearing cover coupled with said mounting feature exterior of said first bearing. The first bearing cover may prevent said first bearing from moving from an installed position within said mounting feature during an installation of said sleeve with a component. The mounting feature may comprise a second bearing cover coupled with said mounting feature exterior of said second bearing. The second bearing cover may prevent said second bearing from moving from said installed position within said mounting feature during said installation of said sleeve with said component.

In some embodiments the component may be a shock assembly.

In some embodiments said component may be a frame mount.

In some embodiments said sleeve may comprise a flexible material to provide compliance between a frame mount and a shock assembly.

According to some embodiments there is provided a shock assembly comprising an adapter as set out above, or as described or as claimed anywhere herein.

According to some embodiments there is provided a vehicle comprising a shock assembly as set out above, or as described or as claimed anywhere herein. In some embodiments the shock assembly may be enclosed within a part (e.g. a restricted space) of the vehicle, such as inside a frame of the vehicle. In some embodiments the shock assembly may have a narrow mounting interface width (e.g. 17 mm and 20 mm). In some embodiments the vehicle may be a road bike, a mountain bike, a gravel bike, an electric bike (e-bike), a hybrid bike, a scooter, a motorcycle, an ATV, a personal water craft (PWC), an aircraft, a single wheeled vehicle, a four-wheeled vehicle, a multi-wheeled vehicle, a snow mobile, a UTV such as a side-by-side, and the like. In some embodiments, the shock assembly with an integrated bearing hardware for shock assembly is used on a suspension inclusive device such as, but not limited to an exoskeleton, a seat frame, a prosthetic, an orthotic, a suspended floor, and the like.

In some embodiments, the shock assembly may comprise a mounting feature adapted for mounting the shock assembly between a sprung and/or unsprung part of a vehicle, the integrated bearing hardware permitting rotation between the mounting feature of the shock assembly and the sprung and/or unsprung part of the vehicle during compression and rebound of the shock assembly.

Throughout the description and claims of this specification, the words "comprise" and "contain" and variations of the words, for example "comprising" and "comprises", mean "including but not limited to", and do not exclude other components, integers or steps. Moreover the singular encompasses the plural unless the context otherwise requires: in particular, where the indefinite article is used, the specification is to be understood as contemplating plurality as well as singularity, unless the context requires otherwise.

Preferred features of each aspect of the invention may be as described in connection with any of the other aspects. Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible.

### BRIEF DESCRIPTION OF THE DRAWINGS

One or more embodiments of the invention will now be described, by way of example only, with reference to the accompanying drawings, in which:
Figure 1 is a perspective view of a bicycle with at least one enclosed shock assembly having integrated bearing hardware, in accordance with one embodiment.
Figure 2A is a perspective view of a shock assembly having integrated bearing hardware, in accordance with one embodiment.
Figure 2B is an x-ray side view of a portion of the bicycle frame and the enclosed shock assembly having integrated bearing hardware, shown in accordance with one embodiment.
Figure 3 is a cutaway view of an eyelet of the shock assembly of Figures 2A-2B formed to receive the integrated bearing hardware, shown in accordance with an embodiment.
Figure 4 is a cutaway view of the integrated bearing hardware installed in the shock assembly eyelet of Figure 3, shown in accordance with an embodiment.
Figure 5 is a cutaway view of another integrated bearing hardware installation in the shock assembly eyelet of Figure 3, shown in accordance with an embodiment.
Figure 6 is a cutaway view of yet another integrated bearing hardware installation in the shock assembly eyelet of Figure 3, shown in accordance with an embodiment.
Figure 7 is a cutaway view of another integrated bearing hardware installation in the shock assembly eyelet of Figure 3, shown in accordance with an embodiment.
Figure 8 is a cutaway view of another integrated bearing hardware installation in the shock assembly eyelet of Figure 3, shown in accordance with an embodiment.
Figure 9 is a cutaway view of an adapter with integrated bearing hardware installed therewith, shown in accordance with an embodiment.

The drawings referred to in this description should be understood as not being drawn to scale except if specifically noted.

### DETAILED DESCRIPTION

The detailed description set forth below in connection with the appended drawings is intended as a description of various embodiments of the present invention and is not intended to represent the only embodiments in which the present invention may be practiced. Each embodiment described in this disclosure is provided merely as an example or illustration of the present invention, and should not necessarily be construed as preferred or advantageous over other embodiments. In some instances, well known methods, procedures, objects, and circuits have not been described in detail as not to unnecessarily obscure aspects of the present disclosure.

In general, a suspension system for a vehicle provides a motion modifiable connection between a portion of the vehicle that is in contact with a surface (e.g., an unsprung portion) and some or all of the rest of the vehicle that is not in contact with the surface (e.g., a suspended portion). For example, the unsprung portion of the vehicle that is in contact with the surface can include one or more wheel(s), skis, tracks, hulls, etc., while some or all of the rest of the vehicle that is not in contact with the surface include suspended portions such as a frame, a seat, handlebars, engines, cranks, etc.

The suspension system will include one or numerous components which are used to couple the unsprung portion of the vehicle (e.g., wheels, skids, wings, etc.) with the suspended portion of the vehicle (e.g., seat, cockpit, passenger area, cargo area, etc.). Often, the suspension system will include one or more shock assemblies which are used to reduce feedback from the unsprung portion of the vehicle before that feedback is transferred to the suspended portion of the vehicle, as the vehicle traverses an environment. However, the language used by those of ordinary skill in the art to identify a shock assembly used by the suspension system can differ while referring to the same (or similar) types of components. For example, some of those of ordinary skill in the art will refer to the shock assembly as a shock absorber, while others of ordinary skill in the art will refer to the shock assembly as a damper (or damper assembly).

The shock assembly often consists of a (damping) piston and piston rod telescopically mounted in a fluid filled cylinder (e.g., a housing). The fluid (e.g., damping fluid, working fluid, etc.) may be, for example, a hydraulic oil, a gas such as nitrogen, air, or the like. In one embodiment, the adjustable shock assembly will include a mechanical spring (e.g., a helically wound spring that surrounds or is mounted in parallel with the body of the adjustable shock assembly). In one embodiment, the adjustable shock assembly will include an air spring. In one embodiment, the adjustable shock assembly will include both a mechanical spring and an air spring.

In its basic form, the suspension is used to increase ride comfort, performance, endurance, component longevity and the like. In general, the force of jarring events, rattles, vibrations, jostles, and the like which are encountered by the portion of the vehicle that is in contact with the surface are reduced or even removed as it transitions through the suspension before reaching suspended portions of the vehicle to include components such as seats, steering wheels/handlebars, pedals/foot pegs, fasteners, drive trains, engines, and the like.

As used herein, the terms "down", "up", "downward", "upward", "lower", "upper", and other directional references are relative and are used for reference and identification purposes.

In its basic form, the suspension is used to increase ride comfort, performance, endurance, component longevity and the like. In general, the force of jarring events, rattles, vibrations, jostles, and the like which are encountered by the portion of the vehicle that is in contact with the surface are reduced or even removed as it transitions through the suspension before reaching suspended portions of the vehicle to include components such as seats, steering wheels/handlebars, pedals/foot pegs, fasteners, drive trains, engines, and the like.

For example, on a wheeled vehicle, a portion of the wheel (or tire) will be in contact with the surface being traversed (e.g., pavement, dirt, gravel, sand, mud, rocks, etc.) while a shock assembly and/or other suspension system components will be coupled between a wheel retaining assembly and the suspended portion of the vehicle (often a portion of the vehicle frame and associated systems, the seat, handlebars, pedals, controls, steering wheel, interior, etc.).

In a snow machine, a portion of the track and/or the skis that will be in contact with the surface being traversed (e.g., snow, ice, etc.) while a shock assembly and/or other suspension components will be coupled between a track retaining assembly (and similarly the skis retaining assembly) and the suspended portion of the vehicle (usually including the engine and associated systems, the seat, handlebars, etc.).

In a boat or PWC vehicle, a portion of the hull will be in contact with the surface of the water while a shock assembly and/or other suspension components will be coupled between the hull and the suspended portion(s) of the vehicle (such as the seat, the handlebars, a portion of the vehicle frame, and/or the like).

In an airplane in flight, it is the airframe that is in contact with the surface being traversed (e.g., the air) while a shock assembly and/or other suspension components will be coupled between the airframe and the suspended portion(s) of the vehicle (such as the seats and the like).

The term ride height refers to a distance between a portion of a vehicle and the surface across which the vehicle is traversing. Often, ride height is based on one or more of a number of different measurements such as, but not limited to, a distance between a part of the vehicle and the ground, a measurement between the top of an unsprung portion of a vehicle and a suspended portion of the vehicle there above, etc. For example, a portion of the wheel(s) (or ski, track, hull, etc.) will be in contact with the surface, while one or more adjustable shock assemblies and/or suspension components maintain the suspended portion of the vehicle a certain height there above.

The term initial sag settings or "sag" refers to a pre-defined vehicle ride height and suspension geometry based on the initial compression of one or more shock assemblies of the suspension system for a given vehicle when it is within its normal load envelope configuration (e.g., with a rider/driver and any initial load weight). Once the sag is established for a vehicle, it will be the designated ride height of the vehicle, until and unless the sag is changed.

The initial sag for a vehicle is usually established by the manufacturer. The vehicle sag can then be modified and/or adjusted by an owner, a mechanic, or the like. For example, an owner can modify the sag to designate a new normal ride height based on a vehicle use purpose, load requirements that are different than the factory load configuration, an adjustment modification and/or replacement of one or more of the suspension components, a change in tire size, a performance adjustment, aesthetics, and the like.

In one embodiment, the initial manufacturer will use sag settings resulting in a preestablished vehicle ride height based on vehicle use, size, passenger capacity, load capacity, and the like. For example, a truck (side-by-side, car, or the like) may have a preestablished sag based on an expected load (e.g., a number of passengers, an expected cargo requirement, etc.).

Regardless of the vehicle type, once the sag is established, in a static situation the ride height of the expectedly loaded vehicle should be at or about the established sag. When in motion, the ride height will change as the vehicle travels over the surface, and while the suspension system is used to reduce the transference of any input forces received from the surface to the rest of the vehicle it is also used to maintain the vehicle's sag.

However, when additional weight is added to the vehicle, the suspension and one or more adjustable shock assemblies will be compressed, and the vehicle ride height will be less than the sag.

Additional information regarding sag and sag setup can be found in U.S. Patent 8,838,335 to which reference is made by way of example.

As vehicle utilization scenarios change, one or more shock assemblies of the suspension system can be adjusted for different characteristics based on the use type of the vehicle, terrain, purpose (e.g., rock crawl, normal use, race set-up, etc.), and the like. This modification would result in a modified personal sag setting. For example, a downhill mountain bike rider (motocross rider, off-road truck driver, side-by-side rider, snow machine racer, etc.) would want a suspension configuration with a large range of motion and aggressive rebound and compression speeds to maintain as much contact as possible between the tires and the ground by absorbing the terrain events such as bumps, ruts, roots, rocks, dips, etc. while reducing the impacts felt at the suspended portion and also have the suspension return to its personal sag setting as quickly as possible in preparation for the next encounter.

In contrast, a street bike racer (track racing vehicle, boat/PWC racer, etc.) would want a firmer suspension configuration with a very small range of motion to provide feel for the grip of the tire, maintain friction and/or aerodynamic geometries, and the like, in order to obtain the maximum performance from the vehicle.

In one embodiment, there may be times where changes to a suspension component are desired during a given ride/drive. For example, a bike rider in a sprinting scenario would often want to firm up or possibly even lockout the suspension component to remove the opportunity for rider induced pedal bob. Similarly, a ride/drive from a paved road to an off-road environment (or vice-versa) would also be a time when a change to one or more suspension component settings is valuable.

In the following discussion, the term "active", as used when referring to a valve or shock assembly component, means adjustable, manipulatable, etc., during typical operation of the valve. For example, an active valve can have its operation changed to thereby alter a corresponding shock assembly characteristic damping from a "soft" setting to a "firm" setting (or a stiffness setting somewhere therebetween) by, for example, adjusting a switch in a passenger compartment of a vehicle. Additionally, it will be understood that in some embodiments, an active valve may also be configured to automatically adjust its operation, and corresponding shock assembly damping characteristics, based upon, for example, operational information pertaining to the vehicle and/or the suspension with which the valve is used.

Similarly, it will be understood that in some embodiments, an active valve may be configured to automatically adjust its operation, and corresponding shock assembly damping characteristics, based upon received user input settings (e.g., a user-selected "comfort" setting, a user-selected "sport" setting, and the like). In many instances, an "active" valve is adjusted or manipulated electronically (e.g., using a powered solenoid, or the like) to alter the operation or characteristics of a valve and/or other component. As a result, in the field of suspension components and valves, the terms "active", "electronic", "electronically controlled", and the like, are often used interchangeably.

In the following discussion, the term "manual" as used when referring to a valve or shock assembly component means manually adjustable, physically manipulatable, etc., without requiring disassembly of the valve, damping component, or shock assembly which includes the valve or damping component. In some instances, the manual adjustment or physical manipulation of the valve, damping component, or shock assembly which includes the valve or damping component, occurs when the valve is in use. For example, a manual valve may be adjusted to change its operation to alter a corresponding shock assembly damping characteristic from a "soft" setting to a "firm" setting (or a stiffness setting somewhere therebetween) by, for example, manually rotating a knob, pushing or pulling a lever, physically manipulating an air pressure control feature, manually operating a cable assembly, physically engaging a hydraulic unit, and the like. For purposes of the present discussion, such instances of manual adjustment/physical manipulation of the valve or component can occur before, during, and/or after "typical operation of the vehicle".

It should further be understood that a vehicle suspension may also be referred to using one or more of the terms "passive", "active", "semi-active" or "adaptive". As is typically used in the suspension art, the term "active suspension" refers to a vehicle suspension which controls the vertical movement of the wheels relative to vehicle. Moreover, "active suspensions" are conventionally defined as either a "pure active suspension" or a "semi-active suspension" (a "semi-active suspension" is also sometimes referred to as an "adaptive suspension"). In a conventional "pure active suspension", a motive source such as, for example, an actuator, is used to move (e.g. raise or lower) a wheel with respect to the vehicle. In a "semi-active suspension", no motive force/actuator is employed to adjust move (e.g. raise or lower) a wheel with respect to the vehicle.

Rather, in a "semi-active suspension", the characteristics of the suspension (e.g. the firmness of the suspension) are altered during typical use to accommodate conditions of the terrain and/or the vehicle. Additionally, the term "passive suspension", refers to a vehicle suspension in which the characteristics of the suspension are not changeable during typical use, and no motive force/actuator is employed to adjust move (e.g. raise or lower) a wheel with respect to the vehicle. As such, it will be understood that an "active valve", as defined above, is well suited for use in a "pure active suspension" or a "semi-active suspension".

Embodiments provided herein disclose a new and novel integrated bearing hardware for a shock assembly. In one embodiment, the integrated bearing hardware allows the shock assembly to be installed in locations that require a narrow mounting interface and/or require the shock to be installed inside a frame.

For example, some new bikes have one or more shock assemblies inside the frame. This enclosed environment can introduce performance induced issues such as heat and cooling cycles that can deform and/or otherwise deleteriously effect shock assembly components and lead to issues such as premature wear and the like. One solution is a self-lubricating composite (metal-polymer) bushing (e.g., DU ^{®} bushing, or the like) that has a longer fatigue life, but has greatly increased rotational friction compared to standard plastic bushing (e.g., IGUS bushings, or the like). Additionally, some bikes require a narrow (in some examples 17mm and 20mm) mounting interface width which is significantly shorter than a FOX standard 30mm wide bearing hardware solution.

Although narrow mounting interfaces such as 17mm and 20mm are discussed in accordance with an embodiment, this is for purposes of clarity. In one embodiment, the design is adapted to many widths, not just the 17mm and 20mm widths. Similarly, the diameter of the shock bolt could also be larger or smaller.

However, the new and novel integrated bearing hardware for a shock assembly solution combines the low-friction interface of the standard IGUS bushings with the tight fit and load-carrying capacity of the DU bushing. The disclosed bearings have a much lower friction value than the DU bushing, while pressing the bearings into the damper body give it the rigidity and strength of the DU bushing configuration. Installing the bearings directly into the shock damper body maintains the narrow width requirements.

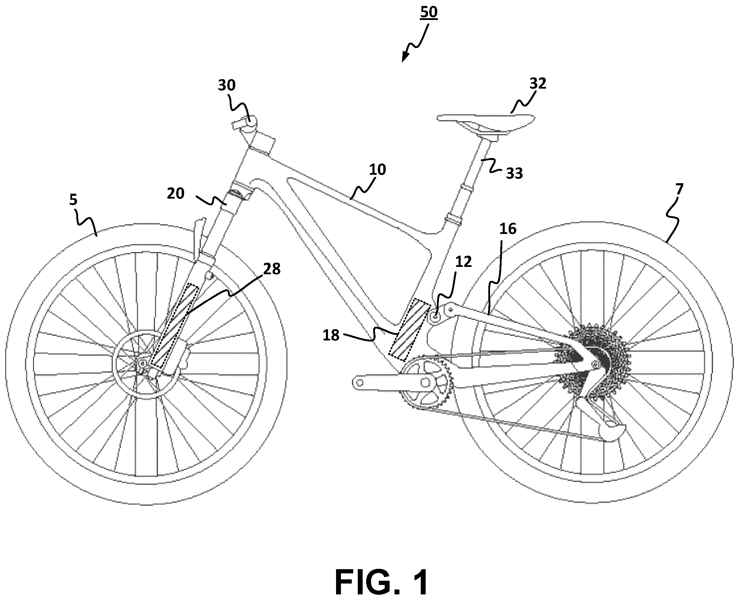

Referring now to Figure 1, a schematic side view of a bicycle 50 with at least one enclosed shock assembly having integrated bearing hardware is shown in accordance with one embodiment. Although a bicycle is used in the discussion. In one embodiment, the shock assembly having integrated bearing hardware is not enclosed. In one embodiment, the shock assembly having integrated bearing hardware is used on another vehicle such as, but not limited to a road bike, a mountain bike, a gravel bike, an electric bike (e-bike), a hybrid bike, a scooter, a motorcycle, an ATV, a personal water craft (PWC), an aircraft, a single wheeled vehicle, a four-wheeled vehicle, a multi-wheeled vehicle, a snow mobile, a UTV such as a side-by-side, and the like. In one embodiment, the shock assembly with an integrated bearing hardware for shock assembly is used on a suspension inclusive device such as, but not limited to an exoskeleton, a seat frame, a prosthetic, an orthotic, a suspended floor, and the like.

Thus, in addition to the disclosed examples as provided in view of a bicycle 50, one embodiment can be used on shock assemblies used by vehicles with wheels, skis, tracks, hulls, and the like and/or with suspension inclusive devices such as prosthetic limbs, orthotics, exoskeletons, etc. in both enclosed and unenclosed installations.

In one embodiment, bicycle 50 has a frame 10 with a suspension system comprising a swing arm 16 that, in use, is able to move relative to the rest of frame 10; this movement is permitted by, inter alia, shock assembly 18. The front fork assembly 20 also provide a suspension function via a shock assembly 28 in at least one fork leg; as such the bicycle 50 is a full suspension bicycle (such as an ATB or mountain bike).

However, the embodiments described herein are not limited to use on full suspension bicycles. In particular, the term "suspension system" is intended to include vehicles having front suspension only, rear suspension only, seat suspension only, a combination of two or more different suspension types, and the like.

In one embodiment, swing arm 16 is pivotally attached to the frame 10 at pivot point 12. Although pivot point 12 is shown in a specific location, it should be appreciated that pivot point 12 can be found at a different location. In a hard tail bicycle embodiment, there would be no pivot point 12. In one embodiment of a hardtail bicycle, frame 10 and swing arm 16 would be formed as a fixed frame.

Bicycle 50 includes a front wheel 5 which is coupled with the front fork assembly 20 via a front axle. In one embodiment, a portion of front fork assembly 20 (e.g., a steerer tube) passes through the frame 10 and couples with handlebars 30. In so doing, the front fork assembly and handlebars are rotationally coupled with the frame 10 thereby allowing the rider to steer the bicycle 50.

Bicycle 50 includes a rear wheel 7 which is coupled to the swing arm 16 at the rear axle, and a rear damping assembly (e.g., shock assembly 18) is positioned between the swing arm 16 and the frame 10 to provide resistance to the pivoting motion of the swing arm 16 about pivot point 12. In one embodiment, a saddle 32 is connected to the frame 10 via a seatpost 33. In one embodiment, seatpost 33 is a dropper seatpost. In one embodiment, one or more of shock assembly 28, shock assembly 18, seatpost 33, handlebars 30, and/or the like include one or more active damping components.

In one embodiment, bicycle 50 includes an active suspension system including a controller, one or more sensors, smart components, active valve dampers, power source(s), and the like. Additional information for vehicle suspension systems, sensors, and their components as well as adjustment, modification, and/or replacement aspects including manually, semi-actively, semi-actively, and/or actively controlled aspects and wired or wireless control thereof is provided in U.S. Patents 8,838,335; 9,353,818; 9,682,604; 9,797,467; 10,036,443; 10,415,662, to which reference is made by way of example.

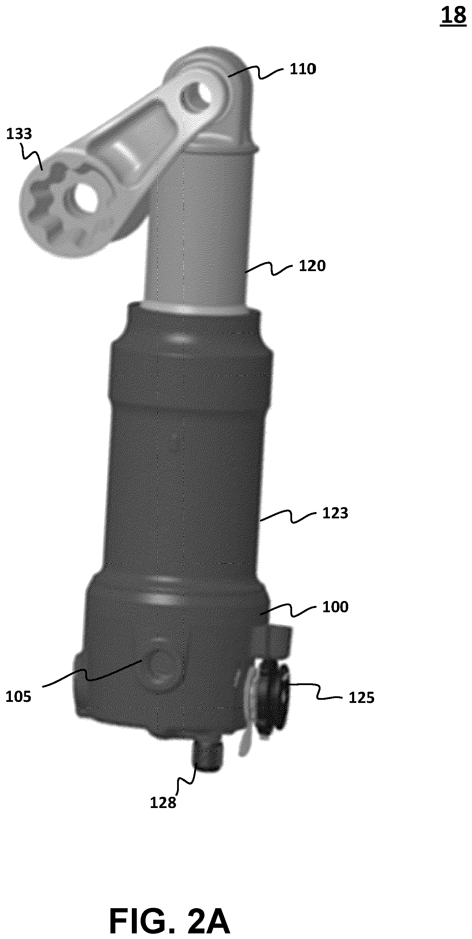

With reference now to Figure 2A, a perspective view of a shock assembly 18 with integrated bearing hardware is shown in accordance with one embodiment. In one embodiment, shock assembly 18 includes a top cap portion 100, mounting interface 105 (e.g., body hardware bores), eyelet 110, frame linkage 133, damper body 120, air sleeve 123. In one embodiment, shock assembly 18 has an internal reservoir. However, in another embodiment, shock assembly 18 has an external or piggyback type reservoir. The use of an internal reservoir is provided merely for purposes of clarity.

In one embodiment, shock assembly 18 includes a pneumatic valve 128 such as, a Shrader valve, Presta valve, Dunlop valve, or the like.

In one embodiment, shock assembly 18 includes one or more adjustable features 125 such as, but not limited to, an adjustable active valve assembly, a compression adjuster, an adjustable rebound valve assembly, and the like. In one embodiment, shock assembly 18 includes each of the pneumatic valve 230 and the adjustable features 125 (e.g., an adjustable active valve assembly, a compression adjuster, an adjustable rebound valve assembly).

In one embodiment, shock assembly 18 may include fewer and/or different components, e.g., shock assembly 17 may not include (or may have different types, shapes, capabilities, etc.) of most, some, or one of the mounting interface 105, eyelet 110, frame linkage 133, damper body 120, air sleeve 123, pneumatic valve 128, and adjustable features 125 (e.g., an adjustable active valve assembly, a compression adjuster, an adjustable rebound valve assembly).

In general, shock assembly 18 utilizes a working fluid within a main chamber within air sleeve 123 to control the speed of movement of a piston (coupled with a shaft) through the main chamber by metering incompressible fluid from one side of the piston to the other during compression or rebound, and additionally from the main chamber to the reservoir, during a compression stroke) to account for the shaft volume that is added to the main chamber as the piston and shaft move further into the main chamber (and in reverse during the rebound or extension stroke).

Although the discussion utilizes a shock assembly 18 (e.g., a FOX float shock assembly) with integrated bearing hardware, this is for purposes of clarity. In another embodiment, the integrated bearing hardware is incorporated into other shock assemblies and/or components thereof for similar or different applications such as, but not limited to an exoskeleton, a seat frame, a prosthetic, an orthotic, a suspended floor, and the like. Further, in another embodiment, the shock assembly with integrated bearing hardware is incorporated into vehicles such as, but not limited to a road bike, a mountain bike, a gravel bike, an electric bike (e-bike), a hybrid bike, a scooter, a motorcycle, an ATV, a personal water craft (PWC), an aircraft, a single wheeled vehicle, a four-wheeled vehicle, a multi-wheeled vehicle, a snow mobile, a UTV such as a side-by-side, and the like. Examples of different shock assemblies are disclosed in U.S. Patents 6,296,092; 7,374,028; 9,033,122; 9,120,362; 9,239,090; 9,353,818; 9,623,716; 10,036,443; 10,427,742; 10,576,803 and 11,091,215 to which reference is made by way of example.

In one embodiment, shock assembly 18 with integrated bearing hardware will include an internal reservoir and/or a remote reservoir. Additional descriptions and details of reservoir structure and operation are described in U.S. Pat. No. 7,374,028 to which reference is made by way of example.

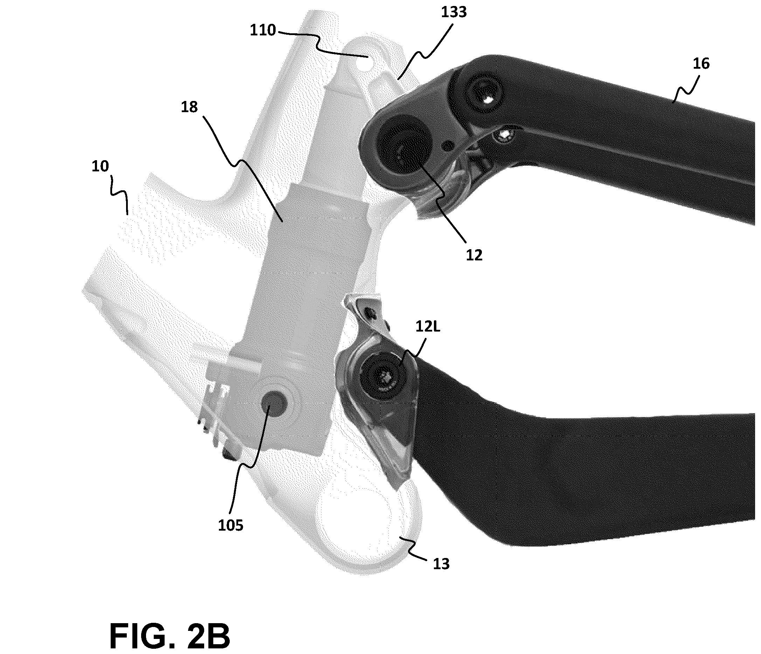

Figure 2B is a x-ray side view of a portion of the bicycle 50 frame 10 illustrating the enclosed shock assembly 18 having integrated bearing hardware, shown in accordance with one embodiment. In one embodiment, Figure 2B includes frame 10, swing arm 16, pivot point 12, lower pivot point 12L, bottom bracket shell 13, and shock assembly 18 (of Figures 1 and 2A).

In one embodiment, shock assembly 18 is coupled with the frame 10 via mounting interface 105. The eyelet 110 is rotationally coupled with frame linkage 133. The other end of frame linkage 133 is locationally coupled with frame 10 and fixedly coupled with swing arm 16 at pivot point 12.

In operation, any rotational motion of swing arm 16 about pivot point 12 is translated through frame linkage 133 to shock assembly 18 as a compression or rebound input. As such, the rotational motion of swing arm 16 about pivot point 12 is damped (either in compression or rebound) by the operation of shock assembly 18.

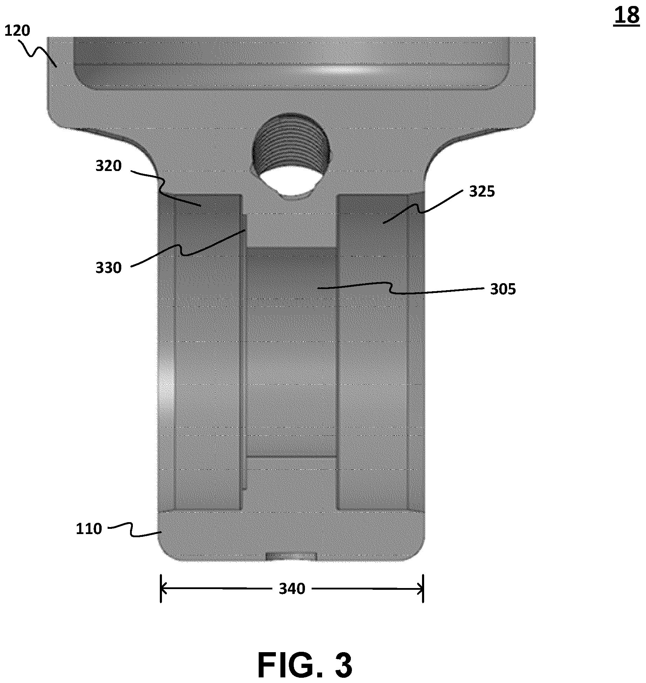

With reference now to Figure 3, a cutaway view of an eyelet of shock assembly 18 of Figures 2A-2B formed to receive the integrated bearing hardware is shown in accordance with an embodiment. In one embodiment the eyelet is the eyelet 110.

In one embodiment, the bearing bores (e.g., bearing bore 320 and bearing bore 325) are asymmetric in the eyelet 110 of shock assembly 18 to tightly control the load path through the bearings and prevent side-loading and binding. In one embodiment, the bearing bores (e.g., bearing bore 320 and bearing bore 325) are machined and/or milled in eyelet 110. In one embodiment, the bearing bores (e.g., bearing bore 320 and bearing bore 325) are formed during a casting of eyelet 110. In one embodiment, the bearing bore 320 and/or bearing bore 325 are cylindrical recesses. In one embodiment, bearing bore 320 and/or bearing bore 325 are symmetrical.

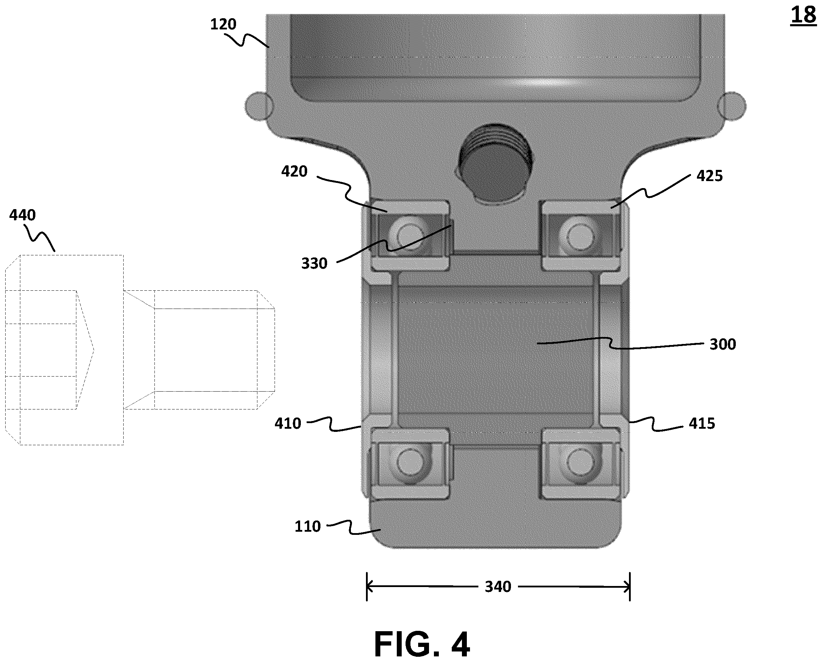

In one embodiment, bearing bore 320 has a relief 330 (or recess, etc.) behind it to ensure that only the outer race of the bearing contacts the body of eyelet 110, and the inner race is free to float. In contrast, the axial position of the bearing in bearing bore 325 is controlled by the axle 300 (of Figure 4) and not the body of eyelet 110, hence bearing bore 325 is deeper than bearing bore 320 so the outer race is able to float. In one embodiment, this allows the load path to be defined through the inner race of the bearings and axle, as well as have a consistent way to define the total width 340 of the assembly. By locating the bearings in this way, the inner and outer races of each bearing maintain alignment and can't get offset or twisted. With the races well aligned and forces going through the inner bearing races and axle 300, the bearings can't bind or get side-loaded which would lead to greater system friction and a reduction in bearing life. This configuration also keeps the bearing seals from being compressed, which would also add friction and reduce bearing life.

Referring now to Figure 4, a cutaway view of the integrated bearing hardware installed in the shock assembly 18 eyelet of Figure 3 is shown in accordance with an embodiment. In one embodiment the eyelet is the eyelet 110.

Although the integrated bearing hardware is shown as being installed in the eyelet 110 of shock assembly 18, this is for purposes of clarity. In one embodiment, the integrated bearing hardware is installed in mounting interface 105 of shock assembly 18. In one embodiment, the integrated bearing hardware is installed in both eyelet 110 and mounting interface 105 of shock assembly 18.

In general, a bearing (e.g., bearing 420 and/or bearing 425) is used to mechanically couple and reduce friction between a rotating part (e.g., an axle 300) and a casing (e.g., body, housing, damper body, etc.). Most bearing includes an outer race, an inner race, and a rotationally supportive friction reducing feature therebetween. The outer race is a ring with an outer diameter (OD) providing the maximum size of the bearing. The inner race is a ring with a smaller OD than the outer race and an inner diameter (ID) that is similar to the OD of the axle being installed. The rotationally supportive element is located between the outer race and the inner race and allows rotation between the outer race and the inner race by maintaining a stand-off between the two races.

When the bearing is assembled, the inner race is positioned inside the outer race and the rotationally supportive element maintains any offset between the two races while providing a rotationally supportive friction reducing capability. A lubricant is often added to the rotationally supportive element to reduce friction and/or enhance operational smoothness of the assembled bearing.

When the bearing is installed, the outer race is usually pressed into (or otherwise coupled with) the body. A shaft (e.g., axle 300) is inserted through the inner race such that the shaft is coupled with the body at a fixed location while being free to axially rotate with respect to the body.

In one embodiment, the rotationally supportive element of the bearing includes a plurality of rolling elements such as, but not limited to: balls (e.g., single row, double row, angular contact, thrust, self-aligning, deep groove, filling notch, etc.), rollers (e.g., cylindrical, gear, spherical, needle, taper, self-aligning, etc.), etc.

In one embodiment, the rotationally supportive element of the bearing is a fluid. In one embodiment, the rotationally supportive element of the bearing is magnetic.

In one embodiment, one or both of bearing 420 and bearing 425 are full-complement fully sealed bearings having an outer race, an inner race, and a plurality of balls therebetween. In one embodiment, the bearing is a groove type embodiment, the outer race has a groove cut into its inner circumference while the inner race has a groove cut into its outer circumference. When assembled, the inner race is positioned inside the outer race and the plurality of balls (or rollers or the like) are retained within the grooves between the two races.

In one embodiment, instead of (or in addition to) grooves, a cage (or retainer, separator, or the like) is used to retain the components of the rotationally supportive element between the inner and outer races and/or maintain the spacing between the components of the rotationally supportive element.

In one embodiment, different types of bearings could be used for each of bearing 420 and/or bearing 425. In one embodiment, different size bearings could be used for each of bearing 420 and/or bearing 425. In one embodiment, the quantity of bearings could be different in each of bearing 420 and/or bearing 425.

With reference still to Figure 4, in one embodiment, eyelet 110 is designed to accept bearing 420 and bearing 425 into the bearing bore 320 and bearing bore 325 of Figure 3 respectively. As discussed in the description of Figure 3, in one embodiment, the bearing bores (e.g., bearing bore 320 and bearing bore 325) have been designed to avoid side-loading the bearings and ensure consistent assembly.

In one embodiment, during assembly of the integrated bearing hardware, bearing 420 is installed (e.g., pressed, etc.) into the eyelet 110 until it bottoms out.

Next, the axle 300 is installed. In one embodiment, axle 300 is a clearance fit to the eyelet 110, a slip fit to the inner diameter of both bearing 420 and bearing 425, and a tight clearance fit to the shock bolt 440 that passes through the axle 300. This helps to transmit loads from the frame linkage 133 through the shock assembly 18 components.

In one embodiment, after the axle 300 is installed, bearing 425 is installed, bottoming out on the axle 300 and not the body of eyelet 110. This helps to ensure even bearing loading and avoids side-loading the bearings when clamped by the shock bolt 440.

In one embodiment, after bearing 425 is installed, the bearing covers (e.g., bearing cover 410 and bearing cover 415) are installed. In one embodiment, bearing cover 410 and bearing cover 415 have a slight interference fit to the bearing 420 and bearing 425 respectively, to prevent bearing 420 and bearing 425 from falling out during installation of the shock assembly 18 into the frame 10.

In one embodiment, bearing cover 410 and bearing cover 415 are a clearance fit with respect to the shock bolt 440 to avoid pushing bearing cover 410 and/or bearing cover 415 out during installation shock assembly 18 into the frame 10.

In one embodiment, bearing cover 410 and/or bearing cover 415 are used in the load path, helping to keep the clamping forces from the shock bolt 440 running through the inner races of the bearing 420 and bearing 425 to avoid side-loading.

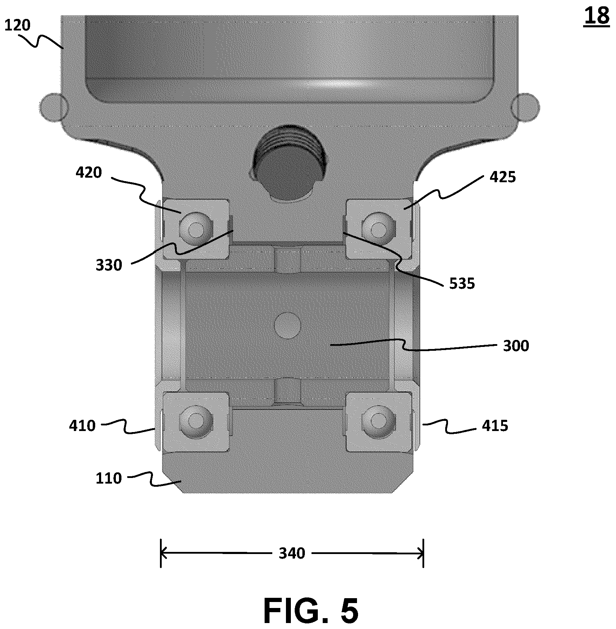

With reference now to Figure 5, a cutaway view of another integrated bearing hardware configuration installed in the shock assembly 18 eyelet of Figure 3 is shown in accordance with an embodiment. In one embodiment, the eyelet is the eyelet 110. For purposes of clarity, the components and/or functionality of Figure 5 that are the same or similar to the components and/or functionality already described in Figures 3 and 4 are not repeated, but instead the entirety of any components and/or functionality discussions provided herein is incorporated by reference.

In one embodiment, bearing bore 320 has a relief 330 behind it to ensure that only the outer race of the bearing 420 contacts the body of eyelet 110, and the inner race is free to float. However, in Figure 5, bearing bore 325 also has a relief 535 behind it to ensure that only the outer race of the bearing 425 contacts the body of eyelet 110, and the inner race is free to float. In so doing, each of bearing 420 and bearing 425 will have individual inner and outer races aligned when installed (e.g., pressed, etc.).

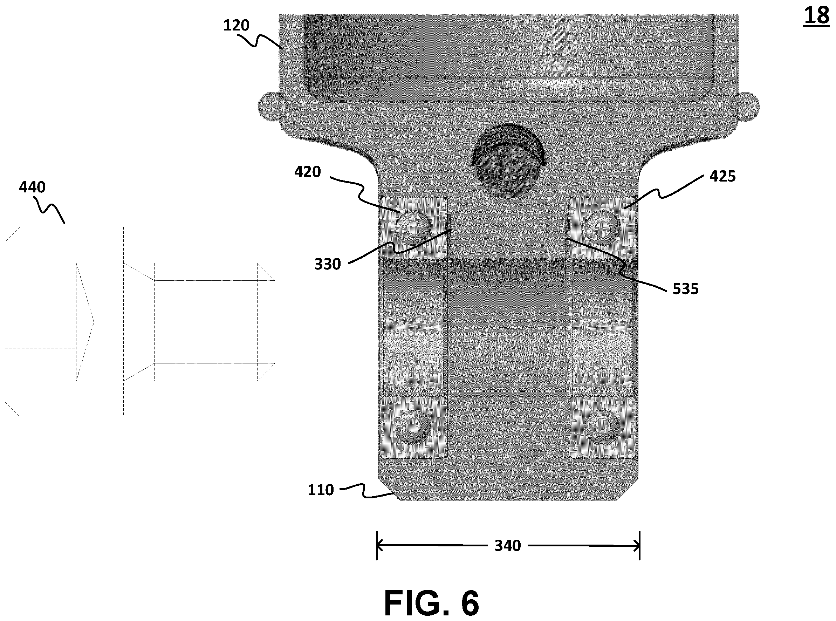

Referring now to Figure 6, a cutaway view of another integrated bearing hardware configuration installed in the shock assembly 18 eyelet of Figure 3 is shown in accordance with an embodiment. In one embodiment, the eyelet is the eyelet 110. For purposes of clarity, the components and/or functionality of Figure 6 that are the same or similar to the components and/or functionality already described in Figures 3 and 4 are not repeated, but instead the entirety of any components and/or functionality discussions provided herein is incorporated by reference.

In one embodiment, bearing bore 320 has a relief 330 behind it to ensure that only the outer race of the bearing 420 contacts the body of eyelet 110, and the inner race is free to float. However, in Figure 6, bearing bore 325 also has a relief 535 behind it to ensure that only the outer race of the bearing 425 contacts the body of eyelet 110, and the inner race is free to float. In so doing, each of bearing 420 and bearing 425 will have individual inner and outer races aligned when installed (e.g., pressed, etc.).

In one embodiment, bearing 420 and bearing 425 are sized such that the shock bolt 440 matches the ID of the bearings and the width 340 matches the mounting surface. As such, there are no axle and/or bearing covers needed for the integrated bearing hardware.

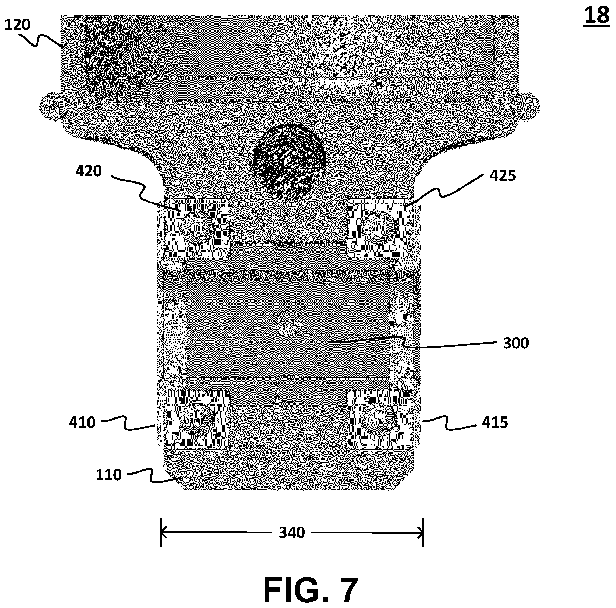

With reference now to Figure 7, a cutaway view of another integrated bearing hardware configuration installed in the shock assembly 18 eyelet of Figure 3 is shown in accordance with an embodiment. In one embodiment, the eyelet is the eyelet 110. For purposes of clarity, the components and/or functionality of Figure 7 that are the same or similar to the components and/or functionality already described in Figures 3 and 4 are not repeated, but instead the entirety of any components and/or functionality discussions provided herein is incorporated by reference.

In one embodiment, unlike Figure 4, there is no relief behind bearing bore 320. As such, when bearing 420 and bearing 425 are installed, they will both bottom out (including both their inner and outer races) against the body of eyelet 110.

In one embodiment, bearing cover 410 and bearing cover 415 have a slight interference fit to the bearing 420 and bearing 425 respectively, to prevent bearing 420 and bearing 425 from falling out during installation of the shock assembly 18 into the frame 10.

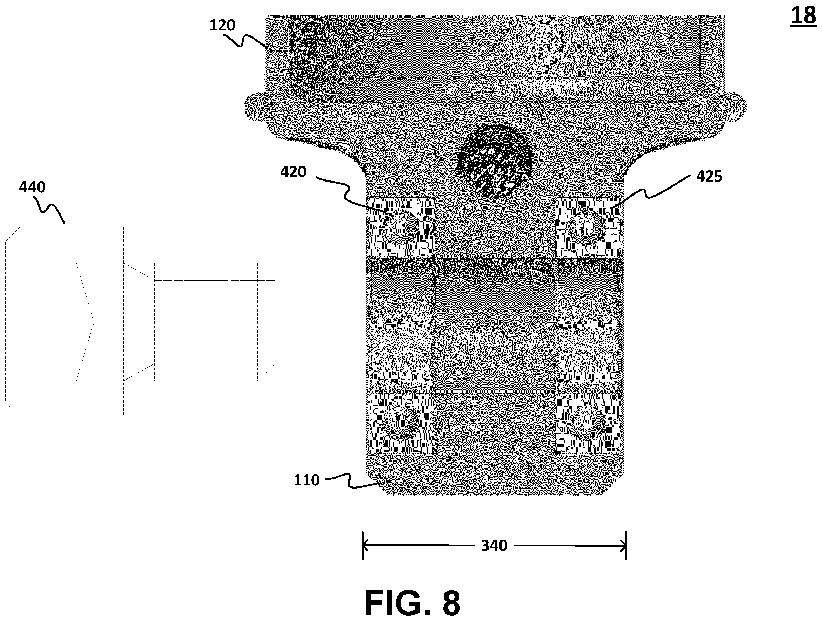

Referring now to Figure 8, a cutaway view of yet another integrated bearing hardware configuration installed in the shock assembly 18 eyelet of Figure 3 is shown in accordance with an embodiment. In one embodiment, the eyelet is the eyelet 110. For purposes of clarity, the components and/or functionality of Figure 8 that are the same or similar to the components and/or functionality already described in Figures 3 and 4 are not repeated, but instead the entirety of any components and/or functionality discussions provided herein is incorporated by reference.

In one embodiment, unlike Figures 3 and 4, there is no relief behind bearing bore 320 or bearing bore 325 (of Figure 3). As such, when bearing 420 and bearing 425 are installed, they will both bottom out (including both their inner and outer races) against the body of eyelet 110.

In one embodiment, bearing 420 and bearing 425 are sized such that the shock bolt 440 matches the ID of the bearings and the width 340 matches the shock assembly mounting interface on the vehicle (e.g., bicycle 50, etc.). As such, there are no axle and/or bearing covers needed for the integrated bearing hardware.

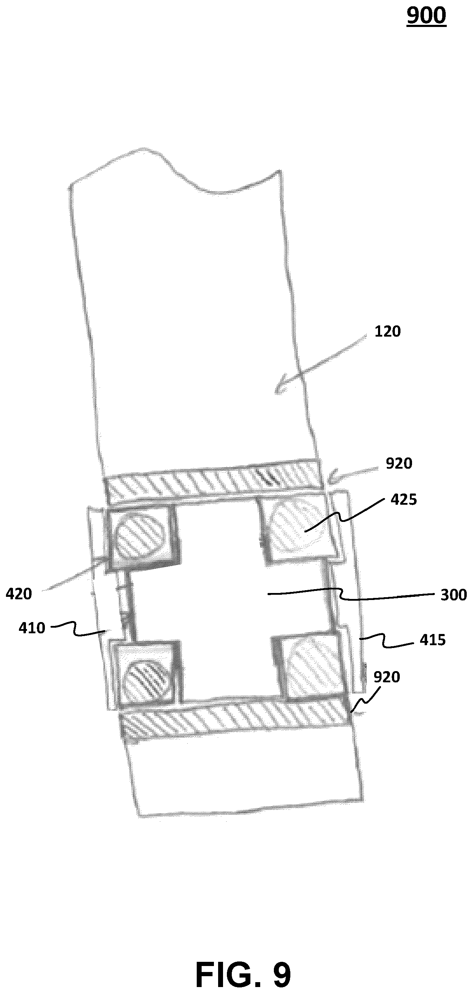

Referring now to Figure 9, a cutaway view of an adapter 900 with integrated bearing hardware installed therewith is shown in accordance with an embodiment. For purposes of clarity, the components and/or functionality of Figure 9 that are the same or similar to the components and/or functionality already described in Figures 3 and 4 are not repeated, but instead the entirety of any components and/or functionality discussions provided herein is incorporated by reference.

In one embodiment, instead of building the integrated bearing hardware in the eyelet 110 (and/or mounting interface 105) of shock assembly 18, the integrated bearing hardware is built in a different body (or separate assembly) such as sleeve 920, and then that body (or separate assembly) sleeve 920 is coupled (e.g., attached, fastened, inserted, etc.) with shock assembly 18 (e.g., with the eyelet 110, mounting interface 105, damper body 120, etc.). In so doing, a floating bearing sleeve is used to couple the shock assembly 18 with the underlying component (e.g., frame mount, etc.).

In one embodiment, sleeve 920 is made of a pliable material and allows for some compliance between frame mount and shock assembly 18. In one embodiment, sleeve 920 is made of a softer material than that of the eyelet 110 and allows for some compliance between frame mount and shock assembly 18. In one embodiment, the sleeve is installed in the eyelet 110 first and then the integrated bearing hardware is built in the sleeve.

The foregoing Description of Embodiments is not intended to be exhaustive or to limit the embodiments to the precise form described. Instead, example embodiments in this Description of Embodiments have been presented in order to enable persons of skill in the art to make and use embodiments of the described subject matter. Moreover, various embodiments have been described in various combinations. However, any two or more embodiments could be combined. Although some embodiments have been described in a language specific to structural features and/or methodological acts, it is to be understood that the subject matter defined in the appended claims is not necessarily limited to the specific features or acts described above. Rather, the specific features and acts described above are disclosed by way of illustration and as example forms of implementing the appended claims.

## Claims

1. A method for installing integrated bearing hardware in a shock assembly (18), said method comprising:
installing a first bearing (420) at a first side of a mounting feature of said shock assembly, in which said first bearing is installed into a first bearing bore (320) of said mounting feature,
wherein a relief is located behind said first bearing bore such that only an outer race of said first bearing contacts a body of said mounting feature;
inserting an axle (300) into said mounting feature, said axle inserted through a second side of said mounting feature until said axle abuts said first bearing;
installing a second bearing (425) at said second side of said mounting feature to retain said axle, said second bearing bottoming out on said axle and not said mounting feature.

2. The method of Claim 1, further comprising the steps of:
coupling a first bearing cover to said mounting feature exterior of said first bearing, optionally with an interference fit, wherein said first bearing cover prevents said first bearing from moving from an installed position within said mounting feature during an installation of said shock assembly with a component, optionally wherein said first bearing cover provides a clearance fit with respect to a shock bolt; and
coupling a second bearing cover to said mounting feature exterior of said second bearing, optionally with an interference fit, wherein said second bearing cover prevents said second bearing from moving from said installed position within said mounting feature during said installation of said shock assembly with said component, optionally wherein said second bearing cover provides a clearance fit with respect to a shock bolt.

3. The method of Claim 1 or 2, wherein:
said step of installing said second bearing comprises installing said second bearing into a second bearing bore of said mounting feature, wherein a second relief is located behind said second bearing bore such that only an outer race of said second bearing contacts said body of said mounting feature.

4. The method of any preceding Claim, wherein said mounting feature is selected from a group consisting of: an eyelet and a body hardware bore.

5. The method of any preceding Claim, further comprising the step of:
coupling said axle with a clearance fit to said mounting feature;
coupling said axle with a slip fit to an inner diameter (ID) of said first bearing and said second bearing; and
coupling said axle with a tight clearance fit to a shock bolt that passes through said axle.

6. The method of any preceding Claim, wherein said first bearing and said second bearing are full-complement fully sealed bearings; and/or
wherein said first bearing and said second bearing are selected from a group of bearings consisting of: a single row ball, a double row ball, an angular contact ball, thrust ball, self-aligning ball, deep groove ball, filling notch ball, cylindrical roller, gear roller, spherical roller, needle roller, taper roller, self-aligning roller, fluid, and magnetic.

7. A shock assembly comprising integrated bearing hardware, which integrated bearing hardware comprises:
a first bearing installed at a first side of a mounting feature of said shock assembly, wherein said first bearing is installed in a first bearing bore of said mounting feature, and a relief is located behind said first bearing bore such that only an outer race of said first bearing contacts a body of said mounting feature;
a second bearing installed at a second side of said mounting feature; and
an axle installed within said mounting feature, said axle abutting said first bearing and said second bearing, wherein said second bearing bottoms out on said axle and not said mounting feature.

8. A shock assembly as claimed in Claim 7, wherein said axle comprises:
a clearance fit to said mounting feature;
a slip fit to an inner diameter (ID) of said first bearing and said second bearing; and
a tight clearance fit to a shock bolt that passes through said axle.

9. A shock assembly as claimed in Claim 7 or 8, further comprising:
a first bearing cover coupled with said mounting feature exterior of said first bearing, said first bearing cover to prevent said first bearing from moving from an installed position within said mounting feature during an installation of said shock assembly with a component; and
a second bearing cover coupled with said mounting feature exterior of said second bearing, said second bearing cover to prevent said second bearing from moving from said installed position within said mounting feature during said installation of said shock assembly with said component;
optionally wherein said first bearing cover and said second bearing cover comprise:
an interference fit with respect to said first bearing and said second bearing respectively; and
a clearance fit with respect to a shock bolt.

10. A shock assembly as claimed in Claim 9, wherein said second bearing is installed in a second bearing bore of said mounting feature, and a relief is located behind said second bearing bore such that only an outer race of said second bearing contacts said body of said mounting feature.

11. A shock assembly as claimed in of any of Claims 7 to 10,
wherein said mounting feature is selected from a group consisting of: an eyelet and a body hardware bore; and/or
wherein said first bearing and said second bearing are full-complement fully sealed bearings; and/or
wherein the first bearing and the second bearing are housed in a sleeve.

12. A shock assembly as claimed in any of Claims 7 to 11, wherein said shock assembly comprises:
a damper chamber comprising a working fluid;
a piston coupled with a shaft, said piston dividing said damper chamber into a compression side and a rebound side; and
wherein said mounting feature is adapted for coupling said shock assembly with a component;
and optionally wherein said integrated bearing hardware permits relative rotation between said component and said shock assembly during compression and rebound of the shock assembly.

13. A vehicle comprising a shock assembly as claimed in any of Claims 7 to 12.

## Patentansprüche

1. Verfahren zum Installieren integrierter Lagerausrüstung in einer Stoßdämpfungsanordnung (18), wobei das Verfahren Folgendes umfasst:
Installieren eines ersten Lagers (420) an einer ersten Seite eines Montagemerkmals der Stoßdämpfungsanordnung, wobei das erste Lager in eine erste Lagerbohrung (320) des Montagemerkmals installiert wird,
wobei sich eine Erhebung hinter der ersten Lagerbohrung befindet, sodass nur ein Außenring des ersten Lagers einen Körper des Montagemerkmals berührt;
Einsetzen einer Achse (300) in das Montagemerkmal, wobei die Achse durch eine zweite Seite des Montagemerkmals eingeführt wird, bis die Achse an dem ersten Lager anliegt;
Installieren eines zweiten Lagers (425) an der zweiten Seite des Montagemerkmals, um die Achse zu halten, wobei das zweite Lager an der Achse und nicht an dem Montagemerkmal aufsetzt.

2. Verfahren nach Anspruch 1, ferner umfassend die folgenden Schritte:
Koppeln einer ersten Lagerabdeckung an das Montagemerkmal außerhalb des ersten Lagers, optional mit einer Presspassung, wobei die erste Lagerabdeckung verhindert, dass sich das erste Lager während einer Installation der Stoßdämpfungsanordnung mit einer Komponente aus einer installierten Position innerhalb des Montagemerkmals bewegt, wobei optional die erste Lagerabdeckung eine Spielpassung in Bezug auf einen Stoßdämpfungsbolzen bereitstellt; und
Koppeln einer zweiten Lagerabdeckung an das Montagemerkmal außerhalb des zweiten Lagers, optional mit einer Presspassung, wobei die zweite Lagerabdeckung verhindert, dass sich das zweite Lager während der Installation der Stoßdämpfungsanordnung mit der Komponente aus der installierten Position innerhalb des Montagemerkmals bewegt, wobei optional die zweite Lagerabdeckung eine Spielpassung in Bezug auf einen Stoßdämpfungsbolzen bereitstellt.

3. Verfahren nach Anspruch 1 oder 2, wobei:
der Schritt des Installierens des zweiten Lagers Installieren des zweiten Lagers in eine zweite Lagerbohrung des Montagemerkmals umfasst, wobei sich eine zweite Erhebung hinter der zweiten Lagerbohrung befindet, sodass nur ein Außenring des zweiten Lagers den Körper des Montagemerkmals berührt.

4. Verfahren nach einem vorhergehenden Anspruch, wobei das Montagemerkmal ausgewählt ist aus einer Gruppe, die aus Folgendem besteht: einer Öse und einer Körperausrüstungsbohrung.

5. Verfahren nach einem vorhergehenden Anspruch, ferner umfassend den folgenden Schritt:
Koppeln der Achse mit einer Spielpassung an das Montagemerkmal;
Koppeln der Achse mit einer Gleitpassung an einen Innendurchmesser (ID) des ersten Lagers und des zweiten Lagers; und
Koppeln der Achse mit einer dichten Spielpassung an einen Stoßdämpfungsbolzen, der durch die Achse hindurchgeht.

6. Verfahren nach einem vorhergehenden Anspruch, wobei das erste Lager und das zweite Lager vollrollige, vollständig abgedichtete Lager sind; und/oder
wobei das erste Lager und das zweite Lager aus einer Gruppe von Lagern ausgewählt sind, die aus Folgendem besteht: ein einreihiges Kugel-, ein zweireihiges Kugel-, ein Schrägkugel-, ein Druckkugel-, ein selbsteinstellendes Kugel-, ein Rillenkugel-, ein Füllkerbenkugel-, ein Zylinderrollen-, ein Zahnradrollen-, ein Tonnenrollen-, ein Nadelrollen-, eine Kegelrollen-, ein selbsteinstellendes Rollen-, ein hydrodynamisches und ein Magnetlager.

7. Stoßdämpfungsanordnung, umfassend integrierte Lagerausrüstung, wobei die integrierte Lagerausrüstung Folgendes umfasst:
ein erstes Lager, das an einer ersten Seite eines Montagemerkmals der Stoßdämpfungsanordnung installiert ist, wobei das erste Lager in einer ersten Lagerbohrung des Montagemerkmals installiert ist und sich eine Erhebung hinter der ersten Lagerbohrung befindet, sodass nur ein Außenring des ersten Lagers einen Körper des Montagemerkmals berührt;
ein zweites Lager, das an einer zweiten Seite des Montagemerkmals installiert ist; und
eine Achse, die innerhalb des Montagemerkmals installiert ist, wobei die Achse an dem ersten Lager und dem zweiten Lager anliegt, wobei das zweite Lager an der Achse und nicht an dem Montagemerkmal aufsetzt.

8. Stoßdämpfungsanordnung nach Anspruch 7, wobei die Achse Folgendes umfasst:
eine Spielpassung an das Montagemerkmal;
eine Gleitpassung an einen Innendurchmesser (ID) des ersten Lagers und des zweiten Lagers; und
eine dichte Spielpassung an einen Stoßdämpfungsbolzen, der durch die Achse hindurchgeht.

9. Stoßdämpfungsanordnung nach Anspruch 7 oder 8, ferner umfassend:
eine erste Lagerabdeckung, die mit dem Montagemerkmal außerhalb des ersten Lagers gekoppelt ist, wobei die erste Lagerabdeckung dazu dient, zu verhindern, dass sich das erste Lager während einer Installation der Stoßdämpfungsanordnung mit einer Komponente aus einer installierten Position innerhalb des Montagemerkmals bewegt; und
eine zweite Lagerabdeckung, die mit dem Montagemerkmal außerhalb des zweiten Lagers gekoppelt ist, wobei die zweite Lagerabdeckung dazu dient, zu verhindern, dass sich das zweite Lager während der Installation der Stoßdämpfungsanordnung mit der Komponente aus der installierten Position innerhalb des Montagemerkmals bewegt;
wobei optional die erste Lagerabdeckung und die zweite Lagerabdeckung Folgendes umfassen:
eine Presspassung in Bezug auf das erste Lager beziehungsweise das zweite Lager; und
eine Spielpassung in Bezug auf einen Stoßdämpfungsbolzen.

10. Stoßdämpfungsanordnung nach Anspruch 9, wobei das zweite Lager in einer zweiten Lagerbohrung des Montagemerkmals installiert ist und sich eine Erhebung hinter der zweiten Lagerbohrung befindet, sodass nur ein Außenring des zweiten Lagers den Körper des Montagemerkmals berührt.

11. Stoßdämpfungsanordnung nach einem der Ansprüche 7 bis 10,
wobei das Montagemerkmal ausgewählt ist aus einer Gruppe, die aus Folgendem besteht: einer Öse und einer Körperausrüstungsbohrung; und/oder
wobei das erste Lager und das zweite Lager vollrollige, vollständig abgedichtete Lager sind; und/oder
wobei das erste Lager und das zweite Lager in einer Hülse untergebracht sind.

12. Stoßdämpfungsanordnung nach einem der Ansprüche 7 bis 11, wobei die Stoßdämpfungsanordnung Folgendes umfasst:
eine Dämpferkammer, die ein Arbeitsfluid umfasst;
einen Kolben, der mit einer Welle gekoppelt ist, wobei der Kolben die Dämpferkammer in eine Kompressionsseite und eine Rückprallseite unterteilt; und
wobei das Montagemerkmal dazu ausgelegt ist, die Stoßdämpfungsanordnung mit einer Komponente zu koppeln;
und wobei optional die integrierte Lagerausrüstung eine relative Drehung zwischen der Komponente und der Stoßdämpfungsanordnung während des Komprimierens und Rückprallens der Stoßdämpfungsanordnung erlaubt.

13. Fahrzeug, umfassend eine Stoßdämpfungsanordnung nach einem der Ansprüche 7 bis 12.

## Revendications

1. Procédé pour installer un matériel de palier intégré dans un ensemble de choc (18), ledit procédé comprenant :
l'installation d'un premier palier (420) au niveau d'un premier côté d'une caractéristique de montage dudit ensemble de choc, où ledit premier palier est installé dans un premier alésage de palier (320) de ladite caractéristique de montage,
dans lequel un relief est situé derrière ledit premier alésage de palier de sorte que seul un chemin extérieur dudit premier palier entre en contact avec un corps de ladite caractéristique de montage ;
l'insertion d'un essieu (300) dans ladite caractéristique de montage, ledit essieu étant inséré au travers d'un second côté de ladite caractéristique de montage jusqu'à ce que ledit essieu vienne en butée contre ledit premier palier ;
l'installation d'un second palier (425) au niveau dudit second côté de ladite caractéristique de montage pour retenir ledit essieu, ledit second palier atteignant son point le plus bas sur ledit essieu et non ladite caractéristique de montage.

2. Procédé de la revendication 1, comprenant en outre les étapes de :
couplage d'un premier couvercle de palier à ladite caractéristique de montage à l'extérieur dudit premier palier, éventuellement avec un ajustement serré, dans lequel ledit premier couvercle de palier empêche ledit premier palier de se déplacer hors d'une position installée au sein de ladite caractéristique de montage pendant une installation dudit ensemble de choc avec un composant, éventuellement dans lequel ledit premier couvercle de palier fournit un ajustement avec jeu par rapport à un boulon de choc ; et
couplage d'un second couvercle de palier à ladite caractéristique de montage à l'extérieur dudit second palier, éventuellement avec un ajustement serré, dans lequel ledit second couvercle de palier empêche ledit second palier de se déplacer hors de ladite position installée au sein de ladite caractéristique de montage pendant ladite installation dudit ensemble de choc avec ledit composant, éventuellement dans lequel ledit second couvercle de palier fournit un ajustement avec jeu par rapport à un boulon de choc.

3. Procédé de la revendication 1 ou 2, dans lequel :
ladite étape d'installation dudit second palier comprend l'installation dudit second palier dans un second alésage de palier de ladite caractéristique de montage, dans lequel un second relief est situé derrière ledit second alésage de palier de sorte que seul un chemin extérieur dudit second palier entre en contact avec ledit corps de ladite caractéristique de montage.

4. Procédé d'une quelconque revendication précédente, dans lequel ladite caractéristique de montage est sélectionnée dans un groupe constitué par : un œillet et un alésage de matériel de corps.

5. Procédé d'une quelconque revendication précédente, comprenant en outre l'étape de :
couplage dudit essieu avec un ajustement avec jeu à ladite caractéristique de montage ;
couplage dudit essieu avec un ajustement glissant à un diamètre intérieur (ID) dudit premier palier et dudit second palier ; et
couplage dudit essieu avec un ajustement serré avec jeu à un boulon de choc qui passe à travers ledit essieu.

6. Procédé d'une quelconque revendication précédente, dans lequel ledit premier palier et ledit second palier sont des paliers jointifs totalement étanches ; et/ou
dans lequel ledit premier palier et ledit second palier sont sélectionnés dans un groupe de paliers constitué par : une bille à rangée unique, une bille à double rangée, une bille à contact angulaire, une bille de poussée, une bille à auto-alignement, une bille à rainure profonde, une bille à encoche de remplissage, un rouleau cylindrique, un rouleau d'engrenage, un rouleau sphérique, un rouleau à aiguille, un rouleau conique, un rouleau à auto-alignement, un fluide et un aimant.

7. Ensemble de choc comprenant un matériel de palier intégré, lequel matériel de palier intégré comprend :
un premier palier installé au niveau d'un premier côté d'une caractéristique de montage dudit ensemble de choc, dans lequel ledit premier palier est installé dans un premier alésage de palier de ladite caractéristique de montage, et un relief est situé derrière ledit premier alésage de palier de sorte que seul un chemin extérieur dudit premier palier entre en contact avec un corps de ladite caractéristique de montage ;
un second palier installé au niveau d'un second côté de ladite caractéristique de montage ;
et
un essieu installé au sein de ladite caractéristique de montage, ledit essieu venant en butée contre ledit premier palier et ledit second palier, dans lequel ledit second palier atteint son point le plus bas sur ledit essieu et non ladite caractéristique de montage.

8. Ensemble de choc selon la revendication 7, dans lequel ledit essieu comprend :
un ajustement avec jeu à ladite caractéristique de montage ;
un ajustement glissant à un diamètre intérieur (ID) dudit premier palier et dudit second palier ; et
un ajustement serré avec jeu à un boulon de choc qui passe à travers ledit essieu.

9. Ensemble de choc selon la revendication 7 ou 8, comprenant en outre :
un premier couvercle de palier couplé à ladite caractéristique de montage à l'extérieur dudit premier palier, ledit premier couvercle de palier devant empêcher ledit premier palier de se déplacer hors d'une position installée au sein de ladite caractéristique de montage pendant une installation dudit ensemble de choc avec un composant ; et
un second couvercle de palier couplé à ladite caractéristique de montage à l'extérieur dudit second palier, ledit second couvercle de palier devant empêcher ledit second palier de se déplacer hors de ladite position installée au sein de ladite caractéristique de montage pendant ladite installation dudit ensemble de choc avec ledit composant ;
éventuellement, dans lequel ledit premier couvercle de palier et ledit second couvercle de palier comprennent :
un ajustement serré par rapport audit premier palier et audit second palier respectivement ;
et
un ajustement avec jeu par rapport à un boulon de choc.

10. Ensemble de choc selon la revendication 9, dans lequel ledit second palier est installé dans un second alésage de palier de ladite caractéristique de montage, et un relief est situé derrière ledit second alésage de palier de sorte que seul un chemin extérieur dudit second palier entre en contact avec ledit corps de ladite caractéristique de montage.

11. Ensemble de choc selon l'une quelconque des revendications 7 à 10,
dans lequel ladite caractéristique de montage est sélectionnée dans un groupe constitué par : un œillet et un alésage de matériel de corps ; et/ou
dans lequel ledit premier palier et ledit second palier sont des paliers jointifs totalement étanches ; et/ou
dans lequel le premier palier et le second palier sont logés dans un manchon.

12. Ensemble de choc selon l'une quelconque des revendications 7 à 11, dans lequel ledit ensemble de choc comprend :
une chambre d'amortissement comprenant un fluide de travail ;
un piston couplé à un arbre, ledit piston divisant ladite chambre d'amortissement en un côté compression et un côté détente ; et
dans lequel ladite caractéristique de montage est adaptée pour coupler ledit ensemble de choc à un composant ;
et éventuellement dans lequel ledit matériel de palier intégré permet une rotation relative entre ledit composant et ledit ensemble de choc pendant la compression et la détente de l'ensemble de choc.

13. Véhicule comprenant un ensemble de choc selon l'une quelconque des revendications 7 à 12.
